# EUROPÄISCHE PATENTSCHRIFT

(11) **EP 3 244 185 B1**
(45) Veröffentlichungstag und Bekanntmachung des Hinweises auf die Patenterteilung: **18.12.2019**
(21) Anmeldenummer: 17169215.5
(22) Anmeldetag: 03.05.2017
(51) Int. Cl.: G01M 17/007

(54) **LENKROBOTER**
STEERING ROBOT
ROBOT ARTICULÉ

(30) Priorität: 09.05.2016 DE 102016108539
(43) Veröffentlichungstag der Anmeldung: 15.11.2017
(73) Patentinhaber: Humanetics Austria GmbH, 4020 Linz (AT)
(72) Erfinder: WIRTHL, David, 4020 Linz (AT); GATTRINGER, Hubert, 4209 Engerwitzdorf (AT); SIMADER, Julian, 4171 St. Peter am Wimberg (AT); STÖGER, Christoph, 4614 Machtrenk (AT); STEFFAN, Hermann, 4020 Linz (AT); MOSER, Andreas, 4060 Leonding (AT)
(74) Vertreter: Manitz Finsterwald Patent- und Rechtsanwaltspartnerschaft mbB

(56) Entgegenhaltungen:
- EP-A1- 0 236 518
- EP-A2- 1 892 514
- US-B1- 7 628 239
- US-B1- 9 164 508

## Beschreibung

Die vorliegende Erfindung betrifft einen Lenkroboter zur automatisierten Betätigung des Lenkrads eines Fahrzeugs.

Einen Lenkroboter gemäß dem Oberbegriff des Anspruchs 1 ist beispielsweise aus US 7,628,239 B1 bekannt. In EP 1 892 514 A2 wird zudem eine Vorrichtung zur Halterung eines Fahrroboters beschrieben, bei welcher die Sitzschienen des Fahrersitzes zur Fixierung verwendet werden.

Derartige Lenkroboter kommen insbesondere im Rahmen von Untersuchungen der Sicherheit eines jeweiligen Fahrzeugs zum Einsatz, bei denen vorgesehen ist, das zu untersuchende Fahrzeug und/oder ein beispielsweise in einer nachgestellten Verkehrssituation mit dem zu untersuchenden Fahrzeug zusammenwirkendes weiteres Fahrzeug entsprechend einer vorgegebenen Trajektorie fahren zu lassen.

Damit das jeweilige Fahrzeug eine solche Trajektorie, also einen räumlich und zeitlich definierten Fahrverlauf, mit hoher Genauigkeit durchläuft, wird die Steuerung des Fahrzeugs vorzugsweise zumindest teilweise automatisiert. Dabei kann insbesondere das Lenken des Fahrzeugs zumindest zeitweilig nicht durch einen Fahrer des Fahrzeugs erfolgen, sondern durch einen Lenkroboter, der dazu ausgebildet ist, das Lenkrad des Fahrzeugs automatisiert zu betätigen. In vergleichbarer Weise kann grundsätzlich alternativ oder auch zusätzlich beispielsweise vorgesehen sein, dass Pedale des Fahrzeugs automatisiert betätigt werden. Auf diese Weise kann ein vorgegebener Ablauf von Lenk- und/oder Pedalbetätigungen zur Umsetzung einer gewünschten Trajektorie sehr präzise und insbesondere reproduzierbar, also auch mehrfach auf identische Weise, verwirklicht werden.

Um herkömmliche Fahrzeuge, in die üblicherweise kein System für ein autonomes oder zumindest automatisiertes Fahren integriert ist, auf die beschriebene Weise untersuchen zu können, ist es erforderlich, einen von dem Fahrzeug separaten Lenkroboter zur automatisierten Betätigung des Lenkrads in einfacher Weise in das Fahrzeug einbauen zu können. Dabei soll der Lenkroboter insbesondere mit unterschiedlichen Fahrzeugen, z.B. Fahrzeugen verschiedener Hersteller und Klassen, verwendbar sein, um möglichst flexibel einsetzbar zu sein.

Für die automatisierte Betätigung des Lenkrads kann ein jeweiliger Lenkroboter eine Antriebseinheit aufweisen, die ein Gehäuse, einen in dem Gehäuse abgestützten Motor sowie eine Kopplungsvorrichtung zur Übertragung eines Antriebsmoments des Motors auf das Lenkrad umfasst. Der Motor kann dann insbesondere derart angesteuert werden, dass das über die Kopplungsvorrichtung auf das Lenkrad übertragene jeweilige Antriebsmoment zu der jeweils gewünschten Lenkbetätigung führt.

Die Ansteuerung des Motors kann dabei auf vielfältige Weise erfolgen. Insbesondere kann die Antriebseinheit dazu eine Steuereinrichtung umfassen, welche den Motor gemäß einer jeweilig gewünschten Trajektorie ansteuert. Der Antriebseinheit kann die jeweils nachzufahrende Trajektorie oder auch lediglich eine zeitliche Abfolge einzelner Lenkbetätigungen einmalig vor einer Fahrt oder kontinuierlich während einer Fahrt insbesondere von außerhalb des Lenkroboters kabelgebunden oder per Funk vorgegeben werden. Wenn sich beispielsweise eine entsprechende Vorgabevorrichtung für das Eingeben oder Auswählen einer Trajektorie oder Lenkbetätigungsabfolge außerhalb des Fahrzeugs befindet und insbesondere in Funkverbindung zu der Steuereinrichtung steht, ist auf diese Weise etwa eine Art Fernsteuerung des Fahrzeugs möglich. Eine entsprechende Vorgabevorrichtung kann aber auch in dem Fahrzeug mitgeführt werden. Zudem können Steuerbefehle auch innerhalb der Antriebseinheit speicherbar sein, um dann etwa während der Fahrt von der Steuereinrichtung ausgelesen und entsprechend umgesetzt zu werden. Insofern kann der Lenkroboter sozusagen programmiert werden und anschließend im Wesentlichen unabhängig von externen Vorrichtungen das Lenkrad betätigen.

Damit ein Antriebsmoment des Motors auf das Lenkrad übertragen werden kann, ist es erforderlich, den Motor positionsfest in dem Fahrzeug zu verankern. Denn ansonsten würde das auf das Lenkrad wirkende Antriebsmoment des Motors zu Reaktionsmomenten führen, welche auf den Motor zurückwirken, so dass sich der Motor selbst bewegen würde und die tatsächliche Lenkradbetätigung dann undefiniert wäre oder überhaupt nicht erfolgt. Daher ist es erforderlich, das Gehäuse der Antriebseinheit, gegen das der Motor abgestützt ist, seinerseits mittels einer Stützvorrichtung positionsfest in dem Fahrzeug zu verankern.

Insbesondere kann der Motor, der typischerweise einen Rotor und einen Stator umfasst, dann mit dem Stator gegen das Gehäuse der Antriebseinheit und ferner über die Stützvorrichtung gegen das jeweilige Fahrzeug, insbesondere gegen dessen Fahrgestell, abgestützt sein, so dass der Motor trotz auf den Stator einwirkender Gegenkräfte positionsfest in dem Fahrzeug angeordnet ist. Eine Bewegung des Rotors relativ zu dem fest im Fahrzeug verankerten Stator entspricht folglich einer Bewegung relativ zu dem Fahrzeug, so dass das von dem Rotor angetriebene Lenkrad in definierter Weise relativ zu dem Fahrzeug betätigt werden kann.

Die Verankerung des Gehäuses der Antriebseinheit in dem Fahrzeug ist jedoch insofern problematisch, als auch während einer Fahrt mit automatisierter Lenkbetätigung in der Regel noch ein Fahrer in dem Fahrzeug sitzt, etwa um den jeweils durchgeführten Versuch zu überwachen und/oder situationsbedingt eingreifen zu können. Durch den für einen Fahrer erforderlichen Platz wird aber der für eine Verankerung des Lenkroboters zur Verfügung stehende Raum eingeschränkt.

Dieses Problem kann beispielsweise dadurch gelöst werden, dass als Stützvorrichtung ein Gestänge mit mehreren voneinander separat verlaufenden Stangen vorgesehen wird, durch das auf die Antriebseinheit rückwirkende Kräfte etwa zu beiden Seiten des Lenkrads nach oben oder auch zunächst in seitliche Richtung bis in den Bereich des Beifahrersitzes und dort dann nach oben und unten abgetragen werden. Ein solches Gestänge wird typischerweise, insbesondere mittels Befestigungsvorrichtungen nach Art eines Saugnapfes, an einer Windschutzscheibe des Fahrzeugs befestigt. Hierdurch kann jedoch die freie Sicht durch die Windschutzscheibe beeinträchtigt sein. Außerdem beanspruchen derartige Gestänge relativ viel Platz.

Es ist eine Aufgabe der Erfindung einen Lenkroboter bereitzustellen, der flexibel in unterschiedlichen Fahrzeugen verwendbar, einfach zu montieren und bei geringem Platzbedarf dennoch zuverlässig positionsfest platzierbar ist.

Die Aufgabe wird gelöst durch einen Lenkroboter mit den Merkmalen des Anspruchs 1.

Erfindungsgemäß ist dabei die Antriebseinheit für die antriebsmäßige Kopplung mit dem Lenkrad unmittelbar an dem Lenkrad, unterhalb des Lenkrads, angeordnet. Eine lenkradnahe Anordnung der Antriebseinheit hat nämlich den Vorteil, dass die Antriebseinheit kompakt ausgebildet sein kann und keine Antriebsmomentübertragung über größere Distanzen erfolgen muss. Bei einer solchen Anordnung erfolgt die nach unten gerichtete Abstützung dann insbesondere annähernd radial zur Drehachse des Lenkrads. Im Unterschied zu einer Abstützung, bei der zunächst ein seitlicher horizontaler Versatz, etwa bis in den Bereich des Beifahrersitzes, vorgesehen ist und die insofern nicht im Wesentlichen nach unten erfolgt, weist die Abstützung direkt nach unten den Vorteil auf, weniger raumgreifend zu sein.

Eine, insbesondere ausschließlich, zumindest im Wesentlichen nach unten erfolgende Abstützung hat gegenüber einem Abstützen mit seitlichem Versatz oder einem sonstigen seitlich von der Drehachse des Lenkrads wegführendem Verlauf den Vorteil, dass keine hohen Drehmomente an Übergängen zwischen horizontalen und vertikalen Abschnitten auftreten können, welche die Stabilität der Stützvorrichtung gefährden oder besonders robuste Gelenkverbindungen erfordern. Dadurch, dass die Abstützung nach unten erfolgt, kann ferner vermieden werden, dass Befestigungsmittel oberhalb des Lenkrads und somit im Bereich der Windschutzscheibe vorgesehen werden müssen, welche die freie Sicht durch die Windschutzscheibe für einen Fahrer und/oder Beifahrer behindern könnten.

Als zumindest im Wesentlichen nach unten erfolgend ist die Abstützung des Gehäuses der Antriebseinheit insbesondere dann anzusehen, wenn der Verlauf, entlang dem Kräfte zur Abstützung des Gehäuses durch die Stützvorrichtung abgeleitet werden, zumindest im Wesentlichen innerhalb einer zur Drehachse des Lenkrads parallelen und vertikalen Ebene verläuft. Insbesondere weist der Verlauf vorzugsweise zumindest im Wesentlichen keine Anteile in eine seitliche Richtung, d.h. senkrecht zu dieser Ebene, auf.

Dabei ist es bevorzugt, wenn ein mit dem Gehäuse verbundenes erstes Ende der Stützvorrichtung und ein entgegengesetztes zweites, an dem Fahrgestell oder der Karosserie des Fahrzeugs abgestütztes Ende der Stützvorrichtung, zu dem auf das Gehäuse wirkende Reaktionsmomente durch die Stützvorrichtung abgetragen werden, durch eine gedachte Linie verbindbar sind, die einen Winkel von höchstens 45° zur Vertikalen aufweist. Insofern erfolgt die Abstützung vertikal nach unten.

Die Stützvorrichtung ist dazu ausgebildet, dass bei einer automatisierten Betätigung des Lenkrads auf das Gehäuse der Antriebseinheit wirkende Reaktionsmomente entlang der Stützvorrichtung innerhalb einer vertikalen, die Drehachse des Lenkrads umfassenden Ebene abgetragen werden. In diesem Fall ist unter Ebene nicht eine unendlich schmale Ebene im streng mathematischen Sinne zu verstehen. Vielmehr kann die Ebene bedingt durch die räumliche Ausdehnung der Stützvorrichtung senkrecht zu ihrer Erstreckung eine gewisse Dicke aufweisen, die jedoch vorzugsweise die Ausdehnung des Gehäuses der Antriebseinheit in diese Richtung und/oder den Durchmesser eines fahrzeugtypischen Lenkrads, insbesondere einer an dem Lenkrad zu befestigenden Adaptereinrichtung des Lenkroboters, nicht überschreitet. Beispielsweise beträgt die Dicke der genannten Ebene höchstens 40 cm, bevorzugt höchstens 30 cm, insbesondere höchstens 20 cm.

Die für eine definierte Betätigung des Lenkrads aufzunehmenden Reaktionsmomente können somit von dem Gehäuse der Antriebseinheit aus innerhalb der genannten Ebene in Richtung nach unten abgetragen werden, so dass sie dann beispielsweise auf einen Boden bzw. letztlich das Fahrgestell des Fahrzeugs oder ein damit verbundenes Element übertragen werden können. Hierdurch wird eine besonders direkte und zuverlässig abgestützte positionsfeste Verankerung der Antriebseinheit des Lenkroboters in dem Fahrzeug erreicht.

Die Stützvorrichtung und insbesondere der gesamte Lenkroboter können ferner, insbesondere hinsichtlich einer äußeren Form, zumindest im Wesentlichen symmetrisch in Bezug auf eine vertikale, die Drehachse des Lenkrads umfassende Ebene ausgebildet sein. Dadurch kann beispielsweise derselbe Lenkroboter, ohne dazu jeweils in besonderer Weise angepasst werden zu müssen, sowohl in links gelenkten als auch in rechts gelenkten Automobilen verwendbar sein.

Ferner umfasst die Stützvorrichtung wenigstens ein Stützelement und ist dazu ausgebildet, derart relativ zu dem Lenkrad angeordnet zu werden, dass sich das Stützelement vertikal erstreckt und mittig unterhalb des Lenkrads angeordnet ist. Das genannte Stützelement ist durch einen balkenförmigen Träger gebildet, der z.B. als ein Profil ausgebildet ist und als Material ein Metall, insbesondere Aluminium, umfasst. Vorzugsweise ist das Stützelement mit seiner Längserstreckung vertikal ausgerichtet. Die vertikale Erstreckung bietet den Vorteil, dass Kräfte direkt und senkrecht zu einem Boden des Fahrzeugs abgeleitet werden können, wodurch eine hohe Stabilität der Anordnung erreicht werden kann.

Durch die Anordnung des Stützelements mittig unter dem Lenkrad kann die Stützvorrichtung insbesondere mit dem genannten Stützelement vertikal zwischen den Beinen eines Fahrers des jeweiligen Fahrzeugs verlaufen. Der auf dem Fahrersitz vor dem Lenkrad sitzende Fahrer wird auf diese Weise durch den Lenkroboter und dessen Stützvorrichtung kaum behindert. Vielmehr können die Beine zu beiden Seiten der Stützvorrichtung an dieser vorbeigeführt werden, so dass die Füße des Fahrers ohne Schwierigkeiten die Pedale erreichen oder, etwa bei automatisierter Pedalbetätigung, auf dem Boden des Fahrzeugs oder einer Bodenplatte des Lenkroboters platziert werden können.

Die von der Stützvorrichtung von dem Gehäuse der Antriebseinheit aufgenommenen Reaktionsmomente werden auf einen als Bodenplatte ausgebildeten horizontalen Flächenabschnitt übertragen, der gemäß einer weiteren vorteilhaften Ausführungsform fest mit dem Fahrgestell oder der Karosserie des Fahrzeugs verbunden oder verbindbar ist. Somit werden die Kräfte also ins Fahrzeug abgeleitet und dort aufgenommen, so dass die Antriebseinheit zuverlässig positionsfest in dem Fahrzeug verankert ist.

Da die Stützvorrichtung das Gehäuse der Antriebseinheit nach unten und gegen einen zumindest im Wesentlichen horizontalen Flächenabschnitt abstützt, werden jeweilige Kräfte in den Flächenabschnitt weitgehend senkrecht zu diesem eingeleitet, was zur Stabilität der Abstützung beiträgt. Dabei liegt das untere Ende der Stützvorrichtung vorzugsweise unmittelbar an dem Flächenabschnitt an oder ist für ein zuverlässigeres Zusammenwirken an dem Flächenabschnitt befestigt. Der Kontakt zwischen der Stützvorrichtung und dem Flächenabschnitt, der sich direkt unterhalt der Drehachse des Lenkrads erstreckt, erfolgt dabei vorzugsweise zumindest auch direkt unterhalb der Drehachse des Lenkrads. Insbesondere können somit jeweilige Kräfte durch die Stützvorrichtung radial zur Drehachse des Lenkrads nach unten zu dem genannten Flächenabschnitt übertragen werden.

Grundsätzlich könnte der genannte Flächenabschnitt einfach durch einen Boden des Fahrzeugs selbst gebildet werden. Vorteilhafterweise ist aber eine von dem Fahrzeug separate Bodenplatte vorgesehen, gegen die sich die Stützvorrichtung abstützt, wobei die Stützvorrichtung an dieser Bodenplatte befestigt ist. Auf diese Weise können im Bereich des Kontakts der Stützvorrichtung zu der Bodenplatte übertragene Kräfte auf eine größere Fläche, nämlich insbesondere über die zumindest im Wesentlichen horizontale Erstreckung der Bodenplatte, verteilt werden. Dies dient nicht nur der Stabilität der Anordnung des Lenkroboters in dem Fahrzeug, sondern auch der Schonung des Fahrzeugbodens, der somit nicht direkt und punktuell belastet wird.

Gemäß einer vorteilhaften Weiterbildung ist die Bodenplatte zur Befestigung an Sitzschienen für den Fahrersitz des Fahrzeugs ausgebildet. Derartige Sitzschienen sind zur Befestigung des Fahrersitzes mit variablem Abstand zum Lenkrad des Fahrzeugs typischerweise ohnehin vorgesehen, verlaufen in der Regel parallel zueinander in Fahrtrichtung ausgerichtet zu beiden Seiten des Fahrersitzes auf dem Boden des Fahrzeugs und sind für eine feste Verankerung des Fahrersitzes vorteilhafterweise mit dem Fahrgestell des Fahrzeugs fest verbunden. Daher kann die Bodenplatte, gegen die die Antriebseinheit über die Stützvorrichtung abgestützt ist, über die Sitzschienen zuverlässig in dem Fahrzeug befestigt werden.

Dabei kann die Befestigung zumindest im Wesentlichen lediglich dazu dienen, die auf dem Boden des Fahrzeugs aufliegende Bodenplatte gegen ein Verrutschen zu fixieren. Die Befestigung der Bodenplatte an den Sitzschienen kann aber auch derart sein, dass die Bodenplatte ihrerseits an den Sitzschienen abgestützt ist, so dass die auf die Bodenplatte abgetragenen Reaktionsmomente vollständig oder zumindest zu einem wesentlichen Anteil über die Sitzschienen abgetragen werden.

Unabhängig von der Art der Lagerung und Befestigung der Bodenplatte ist gemäß einer weiteren vorteilhaften Weiterbildung vorgesehen, dass der Lenkroboter zur zusätzlichen automatisierten Betätigung zumindest eines Pedals des Fahrzeugs eine Pedalbetätigungsvorrichtung aufweist, die gegen die Bodenplatte abgestützt ist, wobei die Pedalbetätigungsvorrichtung insbesondere an der Bodenplatte befestigt ist. Bei einer solchen Weiterbildung ist die Funktionalität des Lenkroboters dahingehend erweitert, dass nicht lediglich eine automatisierte Lenkbetätigung, sondern auch eine automatisierte Pedalbetätigung erfolgen kann. Insofern kann ein solcher Lenkroboter als kombinierter Lenk- und Pedalroboter aufgefasst werden.

Anhand dieser Weiterbildung wird deutlich, dass die Bodenplatte zusätzlich zur Funktion, eine Grundlage für die Abstützung der Antriebseinheit des Lenkroboters zu bieten, auch weitere Funktionen, insbesondere hinsichtlich der Abstützung weiterer Robotereinheiten, erfüllen kann. Die Anordnung mehrerer Robotereinheiten, beispielsweise zur automatisierten Lenkbetätigung einerseits und zur automatisierten Pedalbetätigung andererseits, an derselben Bodenplatte ermöglicht insofern einen insgesamt besonders kompakten Aufbau der gesamten Vorrichtung, als sich die einzelnen Robotereinheiten zumindest die Bodenplatte als gemeinsames Bauteil teilen.

Gemäß einer weiteren vorteilhaften Ausführungsform des Lenkroboters umfasst die Stützvorrichtung mehrere, vorzugsweise zwei, gelenkig miteinander verbundene längliche Stützelemente, deren relative Winkelausrichtung variabel festlegbar ist. Insbesondere kann zusätzlich dem weiter oben beschriebenen Stützelement der Stützvorrichtung noch zumindest ein weiteres längliches Stützelement vorgesehen sein. Die gelenkige Verbindung dieser Stützelemente erhöht dabei die Flexibilität der Anordnung der Antriebseinheit in dem Fahrzeug.

Denn beispielsweise kann zwar die Ausrichtung des einen Stützelements durch eine Befestigung dieses Stützelements an der genannten Bodenplatte, insbesondere auf eine vertikale Ausrichtung, festgelegt sein. Allerdings ist dann aufgrund der gelenkigen Verbindung der Stützelemente die Winkelausrichtung des damit verbundenen weiteren Stützelements noch variabel, so dass dieses weitere Stützelement im Hinblick auf eine antriebswirksame Anordnung der Antriebseinheit an dem Lenkrad geeignet ausgerichtet werden kann.

Nachdem zwei derartige Stützelemente relativ zueinander geeignet ausgerichtet wurden, können sie vorteilhafterweise in dieser relativen Ausrichtung fixiert werden. Zu diesem Zweck kann beispielsweise ein Scharnier- oder Gelenkelement, über welches die Stützelemente miteinander verbunden sein können, insbesondere reversibel, feststellbar ausgebildet sein.

Zur weiteren Erhöhung der Flexibilität der Anordnung des Lenkroboters in einem jeweiligen Fahrzeug kann das weiter oben beschriebene Stützelement eine variabel festlegbare Länge aufweisen. Insbesondere ist bei der vorstehend genannten Ausführungsform mit zumindest zwei gelenkig miteinander verbundenen Stützelementen gemäß einer vorteilhaften Weiterbildung vorgesehen, dass die bezüglich der Abstützung des Gehäuses der Antriebseinheit wirksame Länge zumindest eines der Stützelemente verstellbar ist.

Unter wirksamer Länge ist dabei insbesondere die Strecke zu verstehen, entlang welcher Abstützkräfte von einem Kopplungspunkt des jeweiligen Stützelements zu einem anderen Kopplungspunkt übertragen werden, wobei das jeweilige Stützelement an diesen Kopplungspunkten insbesondere mit der Antriebseinheit oder einem weiteren Stützelement bzw. mit einem weiteren Stützelement oder z.B. dem genannten Flächenabschnitt gekoppelt ist.

Insbesondere in Verbindung mit der genannten Verstellbarkeit der wirksamen Länge zumindest eines der Stützelemente - grundsätzlich aber auch unabhängig davon - ist es ferner vorteilhaft, wenn eines der Stützelemente derart an dem Gehäuse der Antriebseinheit angeordnet ist, dass die Längserstreckung dieses Stützelements parallel zu einer Drehachse des Motors der Antriebseinheit und/oder, wenn der Lenkroboter zur automatisierten Betätigung des Lenkrads eines Fahrzeugs entsprechend angeordnet ist, parallel zur Drehachse dieses Lenkrads ausgerichtet ist.

Wenn die Ausrichtung der Antriebseinheit derjenigen des Stützelements entspricht, kann sie in einfacher Weise durch Verschwenken des Stützelement passend zum Lenkrad eingestellt werden. Eine Längenverstellung des Stützelements führt zudem vorteilhafterweise zu einem bezüglich der jeweiligen Drehachse axialen Versetzen der Antriebseinheit, wodurch die korrekte Anordnung der Antriebseinheit für die antriebswirksame Kopplung der Antriebseinheit mit dem Lenkrad vereinfacht wird.

Beispielsweise kann die Stützvorrichtung zwei längenvariable Stützelemente umfassen, von denen ein erstes fest mit einer horizontalen Bodenplatte verbunden ist und daher in einer vertikalen Ausrichtung festgelegt ist, während das zweite Stützelement relativ zu dem ersten um eine die Stützelemente gelenkig verbindende Gelenkvorrichtung schwenkbar und in einer geeigneten Winkelausrichtung festlegbar ist. Die Antriebseinheit ist dabei an dem der gelenkigen Verbindung entgegengesetzten Ende des zweiten Stützelements befestigt. Über die Längenvariabilität des ersten Stützelements kann dann direkt die Höhe der Antriebseinheit verstellt werden. Die Längenvariabilität des zweiten Stützelements ermöglicht zudem ein Versetzen der Antriebseinheit parallel zur Winkelausrichtung des zweiten Stützelements, das insbesondere parallel zur Drehachse des Lenkrads ausgerichtet fixiert wird, so dass die Antriebsvorrichtung dann auch parallel zur Drehachse versetzbar ist. Somit bietet eine derartige Stützvorrichtung trotz einer grundsätzlich vergleichsweise einfachen Konstruktion ausreichend Freiheitsgrade für eine flexible Anpassung des Lenkroboters an unterschiedliche räumliche Gegebenheiten in verschiedenen Fahrzeugen.

Gemäß einer weiteren vorteilhaften Ausführungsform weist der Lenkroboter eine, insbesondere ringförmige, Adaptereinrichtung auf, die dazu ausgebildet ist, zu gemeinsamer Drehung mit dem Lenkrad an dem Lenkrad befestigt zu werden, und die über die Kopplungsvorrichtung antriebswirksam mit dem Motor der Antriebseinheit verbunden oder zumindest verbindbar ist. Auf diese Weise braucht die Kopplungsvorrichtung der Antriebseinheit nicht direkt an dem Lenkrad selbst anzugreifen.

Da die Lenkräder gängiger Fahrzeuge typischerweise nicht für eine antriebswirksame Kopplung mit der Kopplungsvorrichtung ausgebildet sind und sich zudem unterscheiden können, ist es vorteilhaft, die Kopplungsvorrichtung statt direkt an dem Lenkrad an der genannten Adaptereinrichtung angreifen zu lassen. Denn diese kann einerseits, beispielsweise durch einen daran vorgesehenen Zahnkranz, für eine antriebswirksame Kopplung mit der Kopplungsvorrichtung speziell ausgebildet sein und andererseits zur beschädigungslosen und reversiblen Befestigung an einer ganze Reihe unterschiedlicher Lenkräder typischer Bauart geeignet ausgebildet sein.

Insbesondere lässt sich die Adaptereinrichtung, wenn sie eine Ringform aufweist, koaxial hinter dem Lenkrad anordnen, so dass das Lenkrad trotz der Adaptereinrichtung von einem Fahrer noch in üblicher Weise zum Lenken mit den Händen umgriffen werden kann. Zudem wird durch eine solche Anordnung hinter dem Lenkrad die Funktion eines an dem Lenkrad gegebenenfalls vorgesehenen Airbags nicht beeinträchtigt.

Die Erfindung wird nachfolgend lediglich beispielhaft unter Bezugnahme auf die Figuren näher erläutert.
- Fig. 1: zeigt eine Ausführungsform eines erfindungsgemäßen Lenkroboters in perspektivischer Darstellung.
- Fig. 2: zeigt eine weitere Ausführungsform eines erfindungsgemäßen Lenkroboters, der als kombinierter Lenk- und Pedalroboter ausgebildet ist, in perspektivischer Darstellung.

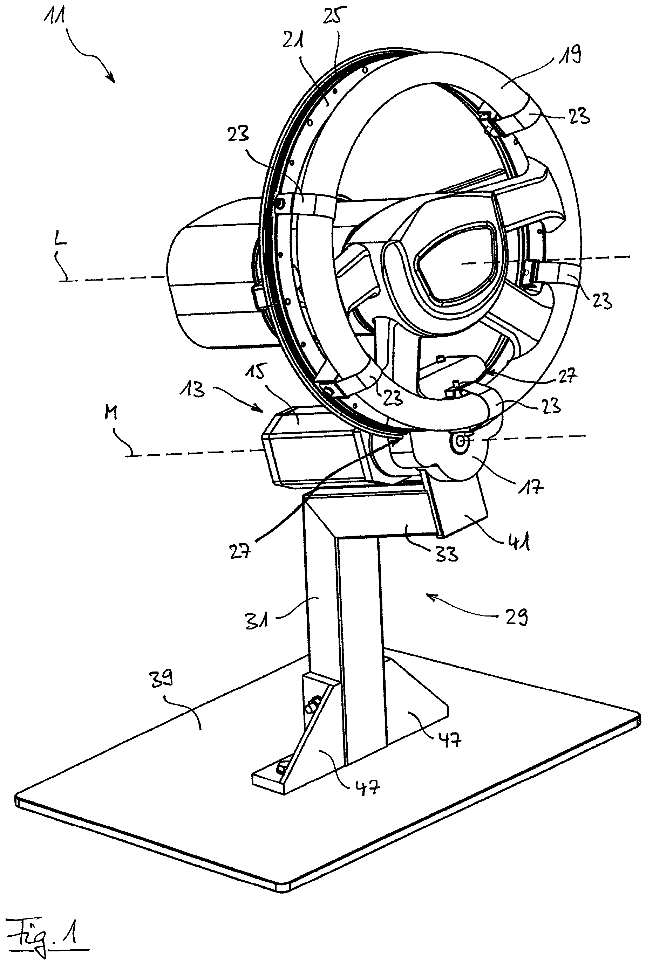

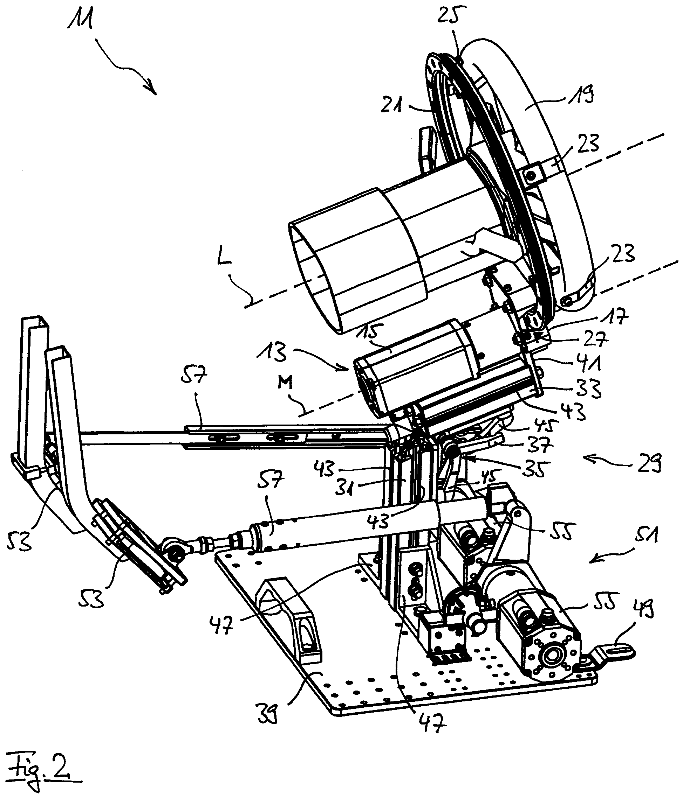

Die in Fig. 1 und Fig. 2 gezeigten jeweiligen Lenkroboter 11 sind einander grundsätzlich sehr ähnlich. Beide Lenkroboter 11 umfassen jeweils eine Antriebseinheit 13 mit einem Gehäuse 15, in dem ein von außen nicht sichtbarer Motor der Antriebseinheit 13 aufgenommen ist. Der Motor kann zur Erzeugung eines Antriebsmoments um eine Motordrehachse M angesteuert werden, wobei sich der Motor an dem Gehäuse 15 abstützt und das Antriebsmoment über eine Kopplungsvorrichtung 17 der Antriebseinheit 13 ausgibt.

Der Lenkroboter 11 dient der automatisierten Betätigung des um die Drehachse L drehbaren Lenkrads 19 eines ansonsten nicht dargestellten Fahrzeugs, bei dem es sich beispielsweise um einen Personen- oder Lastkraftwagen handelt. Dazu ist der Lenkroboter 11 derart relativ zu dem Lenkrad 19 angeordnet, dass der Motor der Antriebseinheit 13 über die Kopplungsvorrichtung 17 antriebswirksam mit dem Lenkrad 19 verbunden ist.

Zu diesem Zweck ist an dem Lenkrad 19 eine Adaptereinrichtung 21 vorgesehen, die als ringförmige Scheibe ausgebildet ist und zumindest im Wesentlichen dem Lenkrad 19 entsprechende Maße aufweist. Die Adaptereinrichtung 21 ist mittels Schellen 23 zu gemeinsamer Drehung um die Drehachse L des Lenkrad 19 mit dem Lenkrad 19 verbunden. Bezüglich der Drehachse L besteht aber zwischen der Adaptereinrichtung 21 und dem Lenkrad 19 ein axialer Versatz, so dass die Adaptereinrichtung 21 und das Lenkrad 19 axial voneinander beabstandet sind. Auf diese Weise kann das Lenkrad 19 trotz der daran befestigten Adaptereinrichtung 21 noch von der Hand eines Fahrers umgriffen werden, so dass das Fahrzeug auf übliche Weise manuell lenkbar bleibt. Durch die Anordnung der ringförmigen Adaptereinrichtung 21 axial hinter dem Lenkrad 19 wird zudem verhindert, dass die Funktion eines an dem Lenkrad 19 vorgesehenen Airbags durch die Adaptereinrichtung 21 behindert wird.

Die Ausgabe des Antriebsmoments des Motors erfolgt über ein im Inneren der Kopplungsvorrichtung 17 angeordnetes Zahnrad, das mit einem die Adaptereinrichtung 21 umfänglich umgebenden Zahnkranz 25 zusammenwirkt. Dazu durchläuft die Adaptereinrichtung 21 in einem Bereich zwischen der Drehachse L des Lenkrads 19 und der Motordrehachse M eine Führungsbahn 27 der Kopplungsvorrichtung 17, durch die einerseits das zuverlässige Ineinandergreifen des Zahnrads in der Kopplungsvorrichtung 17 und des Zahnkranzes 25 der Adaptereinrichtung 21 sichergestellt wird sowie andererseits die Adaptereinrichtung 21 an der Kopplungsvorrichtung 17 gehalten wird.

Damit das genannte Zahnrad innerhalb der Kopplungsvorrichtung 17 und der Zahnkranz 25 der Adaptereinrichtung 21 antriebswirksam aneinander abwälzen können, sind sie achsparallel zueinander ausgerichtet. Dazu ist die Antriebseinheit 13 relativ zu dem Lenkrad 19 derart positioniert, dass die Drehachse L des Lenkrads 19 und die Motordrehachse M parallel zueinander sind. Diese Ausrichtung wird auch durch die Führung der Adaptereinrichtung 21 in der Führungsbahn 27 der Kopplungsvorrichtung 17 unterstützt. Damit sich aber bei Übertragung eines Antriebsmoments von dem Motor auf das Lenkrad 19 nicht die Antriebseinheit 13 um das Lenkrad 19 dreht, sondern das Lenkrad 19 um seine Drehachse L gedreht wird, muss die Antriebseinheit 13 positionsfest in dem Fahrzeug verankert sein.

Diese Verankerung erfolgt über eine Stützvorrichtung 29 die mit dem Gehäuse 15 der Antriebseinheit 13 verbunden ist und das Gehäuse der Antriebseinheit 15 nach unten abstützt. Die Stützvorrichtung 29 weist ein erstes und ein zweites längliches Stützelement 31, 33 auf, die bei der in Fig. 1 gezeigten Ausführungsform vereinfacht als starr miteinander verbunden dargestellt sind, vorzugsweise aber wie bei der in Fig. 2 gezeigten Ausführungsform über eine Gelenkvorrichtung 35 gelenkig miteinander verbunden sind, so dass die Winkelausrichtung der Stützelemente 31, 33 relativ zueinander variabel ist. Durch Anziehen eines Gelenkhebels 37 der Gelenkvorrichtung 35 kann eine eingenommene Winkelausrichtung festgelegt werden.

Dabei ist das erste Stützelement 31 dazu ausgebildet, sich mit einem von der Gelenkvorrichtung 35 beabstandeten Ende vertikal gegen einen als Bodenplatte ausgebildeten horizontalen Flächenabschnitt 39 abzustützen, während das zweite Stützelement 33 mit seinem von der Gelenkvorrichtung 35 beabstandeten Ende mit dem Gehäuse 15 der Antriebseinheit 13 fest verbunden und dabei mit seiner Längserstreckung parallel zur Motordrehachse M ausgerichtet ist. Die Verbindung des zweiten Stützelements 33 mit dem Gehäuse 15 erfolgt über eine Platte 41, die an einer Stirnseite des zweiten Stützelements 33 aufgeschraubt ist, sich zwischen dem Gehäuse 15 der Antriebseinheit 13 und der Kopplungsvorrichtung 17 erstreckt und sowohl mit dem Gehäuse 15 als auch mit der Kopplungsvorrichtung 17 verbunden ist.

Da das erste Stützelement 31 bezüglich seiner Längserstreckung zumindest im Wesentlichen vertikal ausgerichtet ist, wird durch die in beiden Ausführungsformen zueinander gewinkelte Anordnung des ersten und zweiten Stützelements 31, 33 ermöglicht, dass sich das zweite Stützelement 33 parallel zur Drehachse L des Lenkrads 19 erstreckt. Somit können insbesondere auch die Motordrehachse M und die Drehachse L des Lenkrads 19 parallel zueinander angeordnet werden, wobei diese parallele Anordnung durch die Stützvorrichtung 29 unterstützt wird.

Bei der in Fig. 2 gezeigten Ausführungsform des Lenkroboters 11 sind die Stützelemente 31, 33 als Metallprofile ausgebildet und weisen parallel zu ihrer Längserstreckung seitliche Führungsnuten 43 auf, die beidseitig hinterschnitten sind. Die Befestigung der Gelenkvorrichtung 35 an dem ersten und an dem zweiten Stützelement 31, 33 erfolgt dabei jeweils dadurch, dass ein Führungsbolzen (nicht zu sehen) in eine jeweilige Führungsnut 43 eingreift und die Hinterschneidung der Führungsnut 43 mit einem Kopfabschnitt, der gegenüber dem übrigen Führungsbolzen eine Durchmesservergrößerung aufweist, hintergreift.

Dies erlaubt einen Längsversatz der Gelenkvorrichtung 35 relativ zu dem jeweiligen Stützelement 31, 33. Mittels eines jeweiligen Feststellhebels 45 kann der Führungsbolzen, etwa infolge eines Zusammenwirkens zweier Gewinde, derart angezogen werden, dass seine Längsposition innerhalb der jeweiligen Führungsnut 43 und somit auch die Längsposition der Gelenkvorrichtung 35 relativ zu dem jeweiligen Stützelement 31, 33 zumindest reibschlüssig festgelegt wird. Auf diese Weise kann die für das Stützen der Antriebseinheit 13 wirksame Länge eines jeweiligen Stützelements 31, 33 schnell und einfach angepasst werden, was die Montage des Lenkroboters 11 erleichtert.

Weitere Führungsnuten 43 des ersten Stützelements 31 werden zudem zur stirnseitigen Befestigung des ersten Stützelements 31 an der horizontalen Bodenplatte 39 genutzt. Diese Befestigung erfolgt über Winkel 47 deren Schenkel jeweils einerseits mit der Bodenplatte 39 und andererseits seitlich mit dem ersten Stützelement 31 verschraubt sind. Bei der in Fig. 1 gezeigten Ausführungsform erfolgt dabei eine direkte Verschraubung in eine entsprechende Bohrung des ersten Stützelements 31. Bei der in Fig. 2 gezeigten Ausführungsform hintergreifen wiederum Führungsbolzen die jeweilige Führungsnut 43 und können mittels Muttern angezogen werden. Hierdurch wird eine zusätzliche vertikale Versetzbarkeit des ersten Stützelements 31 zur Ergänzung der vertikalen Versetzbarkeit der Gelenkvorrichtung 35 ermöglicht, wodurch die resultierende vertikale Versetzbarkeit der Antriebsvorrichtung 13 insgesamt vergrößert wird.

Wie aus den Figuren zu erkennen ist, ist die gesamte Stützvorrichtung 29 innerhalb eines schmalen Bereichs angeordnet, der parallel und zumindest im Wesentlichen symmetrisch zu einer vertikalen Ebene ausgerichtet ist, welche die Drehachse L des Lenkrads 19 umfasst, und der sich ausgehend von der Drehachse L ausschließlich nach unten erstreckt. Somit ist die gesamte Stützvorrichtung 29 mittig unterhalb der Drehachse L des Lenkrads 19 angeordnet. Bei einer automatisierten Betätigung des Lenkrads 19 auf die Antriebsvorrichtung 13 wirkende Reaktionsmomente werden somit von dem Gehäuse 15 der Antriebsvorrichtung 13 über die Stützvorrichtung 29 zumindest im Wesentlichen nach unten zu der Bodenplatte 39 abgetragen.

Insbesondere befindet sich dabei der Bereich der Bodenplatte 39, der in Kontakt zur Stützvorrichtung 29 ist, exakt unterhalb der Drehachse L. Die Übertragung von Reaktionsmomenten von dem Gehäuse 15 der Antriebseinheit 13 entlang der Stützvorrichtung 29 bis hin zur Bodenplatte 39 erfolgt innerhalb der genannten, die Drehachse L des Lenkrads 19 umfassenden Ebene. Insbesondere erfolgt dabei keine Übertragung von Reaktionsmomenten in eine Richtung senkrecht zu dieser Ebene.

Erst durch die Bodenplatte 39 werden dann gegebenenfalls übertragene Kräfte auf eine größere Fläche verteilt, von wo aus sie insbesondere von dem Fahrgestell des Fahrzeugs aufgenommen werden können. Dazu kann die Bodenplatte 39 einfach auf einem Boden des Fahrzeugs aufliegen. Zur Sicherung gegen ein Verrutschen kann die Bodenplatte 39 aber auch dazu ausgebildet sein, an Sitzschienen für den Fahrersitz des Fahrzeugs befestigt zu werden, und zu diesem Zweck insbesondere, wie bei der in Fig. 2 gezeigten Ausführungsform, in zwei bezüglich der genannten Ebene symmetrisch entgegengesetzten Eckbereichen einen jeweiligen Befestigungsabschnitt 49 aufweisen.

Vorzugsweise steht dieser Befestigungsabschnitt 49 von der Bodenplatte 39 vor. Zudem kann der Befestigungsabschnitt eine Durchführung für ein Verschrauben mit einer jeweiligen Sitzschiene aufweisen. Ferner ist es vorteilhaft, wenn der Befestigungsabschnitt 49 gegenüber der Bodenplatte 39 einen vertikalen Versatz aufweist, um einen entsprechenden Versatz zwischen der Lage der Bodenplatte 39 und, insbesondere einer Oberseite, einer zugeordneten Sitzschiene auszugleichen.

Die Bodenplatte 39 bietet somit eine solide Grundlage für die nach unten erfolgende Abstützung der Antriebseinheit 13 des Lenkroboters 11. Sie muss jedoch nicht auf diesen Zweck beschränkt sein. Insbesondere wenn die Bodenplatte 39 durch Befestigung an den Sitzschienen oder in anderer Weise relativ zu dem Fahrgestell des jeweiligen Fahrzeugs gegen ein Verrutschen fixiert ist, kann die Bodenplatte 39 auch der positionsfesten Anordnung weiterer Robotereinheiten dienen. Exemplarisch ist in Figur 2 die Befestigung einer Pedalbetätigungsvorrichtung 51 in Form eines Pedalroboters gezeigt, durch den der in Fig. 2 gezeigte Lenkroboter 11 zu einem kombinierten Lenk- und Pedalroboter wird.

Zur Betätigung eines jeweiligen Pedals 53 weist der Pedalroboter 51 jeweils eine Antriebsvorrichtung 55 sowie ein Hebelelement 57 zur Übertragung einer von der Antriebsvorrichtung 55 erzeugten Kraft auf das jeweilige Pedal 53 auf. Eine derart erfolgende Betätigung des jeweiligen Pedals 53 ist dann gegenüber der Bodenplatte 39 abgestützt. Der gezeigte Pedalroboter 51 des kombinierten Lenk- und Pedalroboters 11 ist zur Betätigung zweier Pedale 53 ausgebildet. Grundsätzlich kann aber auch die Betätigung lediglich eines Pedals 53 oder von mehr als zwei Pedalen 53 vorgesehen sein.

### Bezuqszeichenliste

- 11: Lenkroboter
- 13: Antriebseinheit
- 15: Gehäuse
- 17: Kopplungsvorrichtung
- 19: Lenkrad
- 21: Adaptereinrichtung
- 23: Schelle
- 25: Zahnkranz
- 27: Führungsbahn
- 29: Stützvorrichtung
- 31: erstes Stützelement
- 33: zweites Stützelement
- 35: Gelenkvorrichtung
- 37: Gelenkhebel
- 39: Bodenplatte
- 41: Platte
- 43: Führungsnut
- 45: Feststellhebel
- 47: Winkel
- 49: Befestigungsabschnitt
- 51: Pedalroboter
- 53: Pedal
- 55: Antriebsvorrichtung
- 57: Hebelelement

- L: Drehachse des Lenkrads
- M: Motordrehachse

## Patentansprüche

1. Lenkroboter (11) zur automatisierten Betätigung des Lenkrads (19) eines Fahrzeugs
mit einer Antriebseinheit (13), die ein Gehäuse (15), einen in dem Gehäuse (15) abgestützten Motor sowie eine Kopplungsvorrichtung (17) zur Übertragung eines Antriebsmoments des Motors auf das Lenkrad (19) umfasst, und mit einer Stützvorrichtung (29), die dazu ausgebildet ist, das Gehäuse (15) der Antriebseinheit (13) positionsfest in dem Fahrzeug zu verankern, wobei die Stützvorrichtung (29) dazu ausgebildet ist, das Gehäuse (15) der Antriebseinheit (13) nach unten abzustützen, **dadurch gekennzeichnet, dass** die Stützvorrichtung (29) wenigstens ein Stützelement (31) umfasst, das durch einen balkenförmigen Träger gebildet ist, sich mit seiner Längserstreckung innerhalb einer vertikalen, eine Drehachse (L) des Lenkrads (19) umfassenden Ebene erstreckt, mittig unterhalb des Lenkrads (19) angeordnet ist und an einer Bodenplatte (39) des Lenkroboters (11) befestigt ist, so dass bei einer automatisierten Betätigung des Lenkrads (19) auf das Gehäuse (15) der Antriebseinheit (13) wirkende Reaktionsmomente entlang der Stützvorrichtung (29) innerhalb der vertikalen, die Drehachse (L) des Lenkrads (19) umfassenden Ebene zu der Bodenplatte (39) abgetragen werden.

2. Lenkroboter nach Anspruch 1,
**dadurch gekennzeichnet,**
**dass** ein mit dem Gehäuse verbundenes erstes Ende der Stützvorrichtung und ein entgegengesetztes zweites, an dem Fahrgestell oder der Karosserie des Fahrzeugs abgestütztes Ende der Stützvorrichtung, zu dem auf das Gehäuse wirkende Reaktionsmomente durch die Stützvorrichtung abgetragen werden, durch eine gedachte Linie verbindbar sind, die einen Winkel von höchstens 45° zur Vertikalen aufweist.

3. Lenkroboter nach zumindest einem der vorstehenden Ansprüche,
**dadurch gekennzeichnet,**
**dass** die Bodenplatte (39) fest mit dem Fahrgestell oder der Karosserie des Fahrzeugs verbunden oder verbindbar ist.

4. Lenkroboter nach zumindest einem der vorstehenden Ansprüche,
**dadurch gekennzeichnet,**
**dass** die Bodenplatte (39) zur Befestigung an Sitzschienen für den Fahrersitz des Fahrzeugs ausgebildet ist.

5. Lenkroboter nach zumindest einem der vorstehenden Ansprüche,
**dadurch gekennzeichnet,**
**dass** der Lenkroboter (11) zur zusätzlichen automatisierten Betätigung zumindest eines Pedals (53) des Fahrzeugs eine Pedalbetätigungsvorrichtung (51) aufweist, die gegen die Bodenplatte (39) abgestützt ist, wobei die Pedalbetätigungsvorrichtung (51) insbesondere an der Bodenplatte (39) befestigt ist.

6. Lenkroboter nach zumindest einem der vorstehenden Ansprüche,
**dadurch gekennzeichnet,**
**dass** die Stützvorrichtung (29) mehrere, vorzugsweise zwei, gelenkig miteinander verbundene längliche Stützelemente (31, 33) umfasst, deren relative Winkelausrichtung variabel festlegbar ist.

7. Lenkroboter nach Anspruch 6,
**dadurch gekennzeichnet,**
**dass** die bezüglich der Abstützung des Gehäuses (15) der Antriebseinheit (13) wirksame Länge zumindest eines der Stützelemente (31, 33) verstellbar ist.

8. Lenkroboter nach Anspruch 6 oder 7,
**dadurch gekennzeichnet,**
**dass** eines der Stützelemente (31, 33) derart an dem Gehäuse (15) der Antriebseinheit (13) angeordnet ist, dass die Längserstreckung dieses Stützelements (33) parallel zu einer Drehachse (M) des Motors der Antriebseinheit (13) und/oder bei Anordnung des Lenkroboters (11) zur automatisierten Betätigung des Lenkrads (19) eines Fahrzeugs parallel zur Drehachse (L) des Lenkrads (19) ausgerichtet ist.

9. Lenkroboter nach zumindest einem der vorstehenden Ansprüche,
**dadurch gekennzeichnet,**
**dass** der Lenkroboter (11) eine, insbesondere ringförmige, Adaptereinrichtung (21) aufweist, die dazu ausgebildet ist, zu gemeinsamer Drehung mit dem Lenkrad (19) an dem Lenkrad (19) befestigt zu werden, und die über die Kopplungsvorrichtung (17) antriebswirksam mit dem Motor der Antriebseinheit (13) verbunden oder verbindbar ist.

## Claims

1. A steering robot (11) for the automated actuation of a steering wheel (19) of a vehicle
having a drive unit (13) which comprises a housing (15); a motor supported in the housing (15); and a coupling apparatus (17) for transmitting a drive torque of the motor to the steering wheel (19);
and having a support apparatus (29) which is configured to anchor the housing (15) of the drive unit (13) in a fixed position in the vehicle,
wherein the support apparatus (29) is configured to downwardly support the housing (15) of the drive unit (13),
**characterized in that**
the support apparatus (29) comprises at least one support element (31) which is formed by a beam-like carrier; whose longitudinal extent extends within a vertical plane comprising an axis of rotation (L) of the steering wheel (19); which is arranged centrally beneath the steering wheel (19) and which is fastened to a base plate (39) of the steering robot (11) such that reaction torques acting on the housing (15) of the drive unit (13) on an automated actuation of the steering wheel (19) are led off to the base plate (39) along the support apparatus (29) within the vertical plane comprising the axis of rotation (L) of the steering wheel (19).

2. A steering robot in accordance with claim 1,
**characterized in that**
a first end of the support apparatus connected to the housing and an opposite second end of the support apparatus, which is supported at the chassis or at the body of the vehicle and to which reaction torques acting on the housing are led off by the support apparatus, can be connected by an imaginary line which has an angle of at most 45° to the vertical.

3. A steering robot in accordance with at least one of the preceding claims,
**characterized in that**
the base plate (39) is fixedly connected or connectable to the chassis or to the body of the vehicle.

4. A steering robot in accordance with at least one of the preceding claims,
**characterized in that**
the base plate (39) is configured for fastening to seat rails for the driver's seat of the vehicle.

5. A steering robot in accordance with at least one of the preceding claims,
**characterized in that**
the steering robot (11) has a pedal actuation apparatus (51), which is supported against the base plate (39), for an additional automated actuation of at least one pedal (53) of the vehicle, with the pedal actuation apparatus (51) in particular being fastened to the base plate (39).

6. A steering robot in accordance with at least one of the preceding claims,
**characterized in that**
the support apparatus (29) comprises a plurality of elongate support elements (31, 33), preferably two, which are connected to one another in an articulated manner and whose relative angular orientation can be variably fixed.

7. A steering robot in accordance with claim 6,
**characterized in that**
the length of at least one of the support elements (31, 33) effective with respect to the support of the housing (15) of the drive unit (13) is adjustable.

8. A steering robot in accordance with claim 6 or claim 7,
**characterized in that**
one of the support elements (31, 33) is arranged at the housing (15) of the drive unit (13) such that the longitudinal extent of this support element (33) is aligned in parallel with an axis of rotation (M) of the motor of the drive unit (13) and/or is aligned in parallel with the axis of rotation (L) of the steering wheel (19) on an arrangement of the steering robot (11) for the automated actuation of the steering wheel (19) of a vehicle.

9. A steering robot in accordance with at least one of the preceding claims,
**characterized in that**
the steering robot (11) has an adapter device (21) which is in particular ringshaped, which is configured to be fastened to the steering wheel (19) for a common rotation with the steering wheel (19) and which is drive-effectively connected or connectable to the motor of the drive unit (13) via the coupling apparatus (17).

## Revendications

1. Robot de direction (11) pour l'actionnement automatisé du volant (19) d'un véhicule,
comportant une unité d'entraînement (13) qui comprend un carter (15), un moteur supporté dans le carter (15) et un dispositif de couplage (17) pour transmettre un couple d'entraînement du moteur au volant (19),
et comportant un dispositif de support (29) qui est réalisé pour ancrer le carter (15) de l'unité d'entraînement (13) solidairement en position dans le véhicule,
dans lequel
le dispositif de support (29) est réalisé pour supporter le carter (15) de l'unité d'entraînement (13) vers le bas,
**caractérisé en ce que**
le dispositif de support (29) comprend au moins un élément de support (31) qui est constitué par un support en forme de poutre, qui s'étend avec son extension longitudinale à l'intérieur d'un plan vertical comprenant un axe de rotation (L) du volant (19), qui est disposé au centre au-dessous du volant (19) et qui est fixé à une plaque de base (39) du robot de direction (11), de telle sorte que lors d'un actionnement automatisé du volant (19), des couples de réaction agissant sur le carter (15) de l'unité d'entraînement (13) sont transférés vers la plaque de base (39) le long du dispositif de support (29) à l'intérieur du plan vertical comprenant l'axe de rotation (L) du volant (19).

2. Robot de direction selon la revendication 1,
**caractérisé en ce que**
une première extrémité du dispositif de support reliée au carter et une seconde extrémité opposée du dispositif de support supportée sur le châssis ou sur la carrosserie du véhicule, vers laquelle des couples de réaction agissant sur le carter sont transférés par le dispositif de support, peuvent être reliées par une ligne imaginaire qui présente un angle maximal de 45° par rapport à la verticale.

3. Robot de direction selon l'une au moins des revendications précédentes,
**caractérisé en ce que**
la plaque de base (39) est reliée ou susceptible d'être reliée fermement au châssis ou à la carrosserie du véhicule.

4. Robot de direction selon l'une au moins des revendications précédentes,
**caractérisé en ce que**
la plaque de base (39) est réalisée pour la fixation à des glissières de siège pour le siège du conducteur du véhicule.

5. Robot de direction selon l'une au moins des revendications précédentes,
**caractérisé en ce que**
pour l'actionnement automatisé supplémentaire d'au moins une pédale (53) du véhicule, le robot de direction (11) comprend un dispositif d'actionnement de pédale (51) supporté contre la plaque de base (39), le dispositif d'actionnement de pédale (51) étant fixé en particulier à la plaque de base (39).

6. Robot de direction selon l'une au moins des revendications précédentes,
**caractérisé en ce que**
le dispositif de support (29) comprend plusieurs éléments de support allongés (31, 33), de préférence deux, reliés de façon articulée entre eux, dont l'orientation angulaire relative peut être fixée de manière variable.

7. Robot de direction selon la revendication 6,
**caractérisé en ce que**
la longueur effective de l'un au moins des éléments de support (31, 33) par rapport au support du carter (15) de l'unité d'entraînement (13) est réglable.

8. Robot de direction selon la revendication 6 ou 7,
**caractérisé en ce que**
l'un des éléments de support (31, 33) est disposé sur le carter (15) de l'unité d'entraînement (13) de telle sorte que l'extension longitudinale dudit élément de support (33) est orientée parallèlement à un axe de rotation (M) du moteur de l'unité d'entraînement (13), et/ou, lors d'un agencement du robot de direction (11) pour l'actionnement automatisé du volant (19) d'un véhicule, elle est orientée parallèlement à l'axe de rotation (L) du volant (19).

9. Robot de direction selon l'une au moins des revendications précédentes,
**caractérisé en ce que**
le robot de direction (11) comprend un dispositif adaptateur (21) en particulier annulaire qui est réalisé pour être fixé au volant (19) en vue d'une rotation conjointe avec le volant (19), et qui est relié ou susceptible d'être relié en termes d'entraînement au moteur de l'unité d'entraînement (13) par l'intermédiaire du dispositif de couplage (17).
